# EUROPÄISCHE PATENTANMELDUNG

(11) **EP 0 985 469 A1**
(43) Veröffentlichungstag der Anmeldung: **15.03.2000**
(21) Anmeldenummer: 99117115.8
(22) Anmeldetag: 31.08.1999
(51) Int. Cl.: B21D 53/06

(54) **Heizkörper, sowie eine Vorrichtung und ein Verfahren zur Herstellung von Heizkörpern**

(30) Priorität: 08.09.1998 DE 19840783
(71) Anmelder: N.V. VASCO, B-3650 Dilsen-Stokkem (BE)
(72) Erfinder: Vaessen, Jos, 3650 Dilsen-Stokkem (BE)
(74) Vertreter: COHAUSZ HANNIG DAWIDOWICZ & PARTNER

(57) **Zusammenfassung**

Die Erfindung betrifft ein Verfahren zur Herstellung von Heizkörpern, wobei mehrere Heizrohre 1 an ihren Enden 2 jeweils mit einem Verteiler 3 verbunden, insbesondere verschweißt werden. Dabei werden die Heizrohre 1 gebogen und an ihren Enden 2 gegen die Verteiler 3 verspannt. Während des Verbindungsvorgangs wird von der Außenseite des Bogens her eine Kraft a auf die Heizrohre 1 aufgebracht.

## Beschreibung

Die vorliegende Erfindung betrifft ein Verfahren zur Herstellung von Heizkörpern, wobei mehrere Heizrohre an ihren Enden jeweils mit einem Verteiler verbunden, insbesondere verschweißt werden.

Es sind verschiedene derartige Verfahren bekannt. Dabei werden zwei Verteiler, die an einer Seite eine Anzahl Löcher aufweisen, über Heizrohre miteinander verbunden. Die Verbindung der Enden der Heizrohre mit den Verteilern an den durch die Löcher vorgegebenen Stellen erfolgt überwiegend durch Schweißen. Es sind jedoch auch andere Verbindungstechniken möglich, wie z.B. Verkleben, Löten oder Brasieren.

Zum Verschweißen der Heizrohre mit den Verteilern gibt es verschiedene Möglichkeiten. Eine Möglichkeit besteht darin, die Enden der Heizrohre mit der Außenseite der Verteiler durch Metall-Aktivgas-Schweißen (MAG) zu verbinden. Dabei muß die Schweißnaht einmal vollständig über den Außenumfang des Heizrohres herumgelegt werden, was einen nicht unerheblichen Aufwand bedeutet und relativ lange dauert.

Eine zweite Möglichkeit besteht darin, die Verteiler in axialer Richtung geteilt in zwei Hälften auszuführen, wobei die Heizrohre in die Löcher der einen Hälfte eingeführt werden können und von innen verschweißbar sind. Anschließend wird die zweite Hälfte des Verteilers an die mit den Heizrohren verbundene erste Hälfte angeschweißt. Hierbei ist ein zusätzlicher Schweißvorgang zum Schließen der Verteiler erforderlich, was sehr zeitaufwendig und kostenintensiv ist.

Eine weitere Möglichkeit zum Verbinden der Verteiler mit den Heizrohren besteht im Elektrowiderstandsschweißen. Dabei müssen die einzelnen Heizrohre mit einer bestimmten Kraft gegen die Verteiler gepreßt werden, um eine saubere Naht und eine sichere Verbindung zu gewährleisten. Das Einstellen und Kontrollieren der zum Anpressen der Heizrohre erforderlichen Kraft erfordert dabei einen erheblichen Aufwand.

Aus der DE 37 21 257 ist ferner ein Verfahren und eine Vorrichtung zum Herstellen rundgebogener Teile für Wärmeaustauscher bekannt, wobei auf die zu biegenden Teile Zugkräfte aufgebracht werden. Hierdurch soll die Bildung von Falten, Beulen, Knicken oder Rissen vermieden werden.

Aufgabe der Erfindung ist es, ein preiswertes, schnelles und leicht anzuwendendes Verfahren der eingangs genannten Art zu schaffen, das eine einfache Einstellung und Kontrolle der erforderlichen Anpreßkraft bei guter Qualität der Schweißnähte gewährleistet.

Diese Aufgabe wird erfindungsgemäß durch ein Verfahren nach Anspruch 1 gelöst. Der wesentliche Vorteil besteht darin, daß die Heizrohre gebogen werden, ihre Enden gegen die Verteiler verspannt werden und während des Verbindungsvorgangs von der Außenseite des Bogens her eine Kraft auf die Heizrohre aufgebracht wird. Diese von der Außenseite des Bogens her aufgebrachte Kraft bewirkt an den beiden Enden der Heizrohre die erforderlichen Anpreßkräfte gegen die Verteiler. Daher können diese Anpreßkräfte auf besonders einfache Weise eingestellt und kontrolliert werden, so daß sich qualitativ besonders hochwertige Schweißnähte ergeben. Da hierbei nur eine Schweißnaht erforderlich ist, ist das Verfahren schnell und preisgünstig durchzuführen.

Die Heizrohre können dabei entweder vollständig über ihre gesamte Länge hinweg gleichmäßig gebogen werden oder ihre Endbereiche werden gerade belassen und nur der dazwischen liegende mittlere Bereich wird gleichmäßig gebogen.

Besonders vorteilhaft ist es, wenn die Kraft bezüglich der Bogenlänge der Heizrohre in deren Mitte aufgebracht wird. Auf diese Weise spaltet sich die aufgebrachte Kraft in zwei gleich große Komponenten an den beiden Enden der Heizrohre auf, so daß die erforderlichen Anpreßkräfte gegen die Verteiler besonders leicht und exakt einzustellen sind.

Besonders gute Schweißergebnisse können dann erreicht werden, wenn die Kraft von einer Steuereinheit gesteuert oder in Verbindung mit an den Verteilern angeordneten Drucksensoren geregelt aufgebracht wird.

Eine besonders günstige Aufteilung der aufgebrachten Kraft in die beiden Anpreßkraft-Komponenten kann dadurch erhalten werden, daß die Heizrohre über einen Winkel zwischen 3° und 90°, vorzugsweise zwischen 10° und 30° gebogen werden.

Das erfindungsgemäße Verfahren kann vorteilhafter Weise dadurch weiter beschleunigt werden, daß die Heizrohre an beiden Enden gleichzeitig mit den Verteilern verbunden werden.

Besonders vorteilhaft ist es ferner, wenn die Heizrohre vor dem Verbinden mit den Verteilern an den Enden sich verjüngend, insbesondere abgerundet oder konusförmig ausgeformt werden und mit ihren Enden in die Löcher der Verteiler eingesteckt werden. Diese Löcher sind dabei kleiner als der Außendurchmesser der Heizrohre, so daß die Heizrohre nicht vollständig in den Verteiler hineingesteckt werden, sondern hiergegen verspannt und dabei gleichzeitig zentriert werden.

Um die den Heizrohren zugewandte Seite der Verteiler gegen den Druck der verspannten Heizrohre zu unterstützen, ist es besonders vorteilhaft, wenn von der Innenseite der Verteiler her eine Gegenkraft auf die die Öffnungen der Verteiler umgebenden Bereiche aufgebracht wird.

Auf besonders einfache und schnelle Weise kann das erfindungsgemäße Verfahren durch Widerstandsschweißen oder durch Kondensatorentladungsschweißen durchgeführt werden, wobei sich gleichzeitig besonders gleichmäßige Schweißnähte ergeben.

Das Verfahren kann besonders leicht dadurch automatisiert werden, daß die Heizrohre einzeln nacheinander mit den Verteilern verbunden werden.

Das erfindungsgemäße Verfahren kann nicht nur bei Heizkörpern mit gebogenen Heizrohren, sondern auch für Heizkörper mit geraden Heizrohren verwendet werden, wenn die Heizrohre nachdem Verbinden mit den Verteilern, insbesondere in einer Presse wieder geradegebogen werden.

Die Erfindung betrifft weiterhin eine Vorrichtung zur Durchführung des vorstehend beschriebenen Verfahrens, die als Mittel zum Aufbringen der Kraft auf die Heizrohre vorzugsweise einen Druckzylinder aufweisen kann.

Weitere Vorteile und Merkmale der Erfindung ergeben sich aus den Unteransprüchen sowie aus der nachfolgenden Beschreibung und den in den Zeichnungen dargestellten Ausführungsbeispielen.

Es zeigen:
- Figur 1:: eine schematische Darstellung des erfindungsgemäßen Verfahrens von oben betrachtet;
- Figur 2:: die Aufteilung der aufgebrachten Kraft in die beiden Anpreßkräfte an den Enden der Heizrohre;
- Figur 3:: vorteilhafte Ausbildungen der Enden der Heizrohre;
- Figur 4:: schematische Darstellung einer Vorrichtung zur Durchführung des erfindungsgemäßen Verfahrens in einer Seitenansicht;
- Figur 5:: vergrößerte Darstellung der Einzelheit E aus Figur 4 und

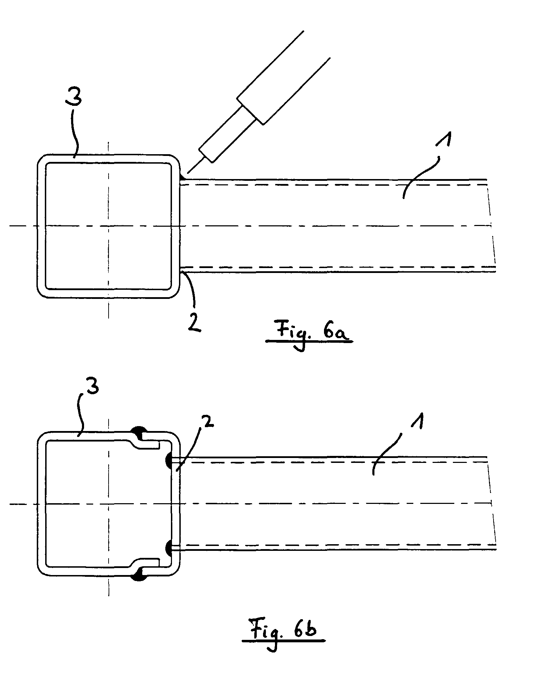

- Figur 6a und Figur 6b:: herkömmliche Verbindungsverfahren.

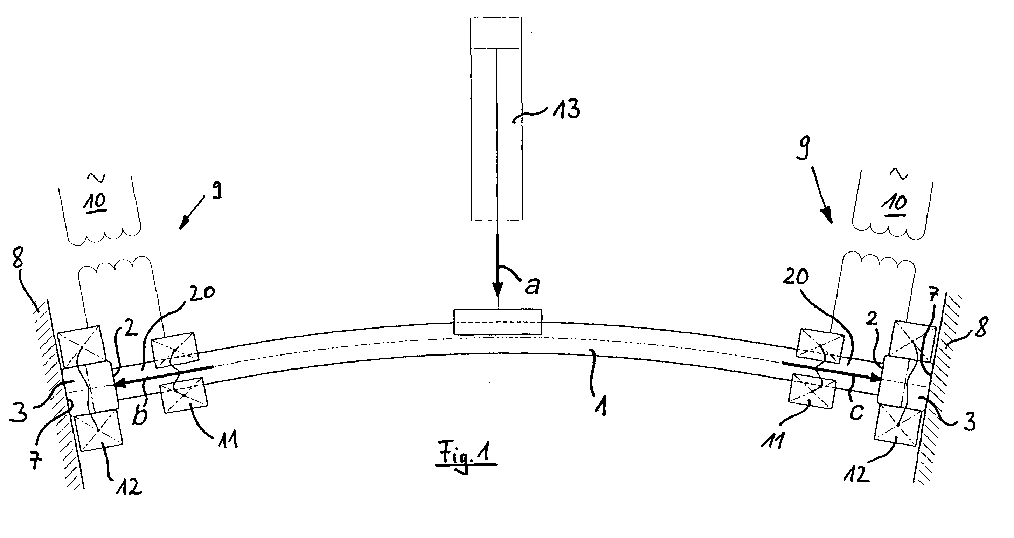

Die schematische Darstellung in Figur 1 zeigt ein Heizrohr 1, das zwischen den geraden Endbereichen 20 gleichmäßig zu einem Bogen gebogen ist, welcher sich über einen Winkel von 20° erstreckt. An seinen Enden 2 ist das Heizrohr 1 jeweils gegen einen Verteiler 3 verspannt. Dabei liegen die sich nach außen hin verjüngenden Enden 2 in Öffnungen 4 der Verteiler 3 derart ein, daß sich die Heizrohre 1 mit ihrem vollen Außendurchmesser am Gehäuse des Verteilers 3 abstützen.

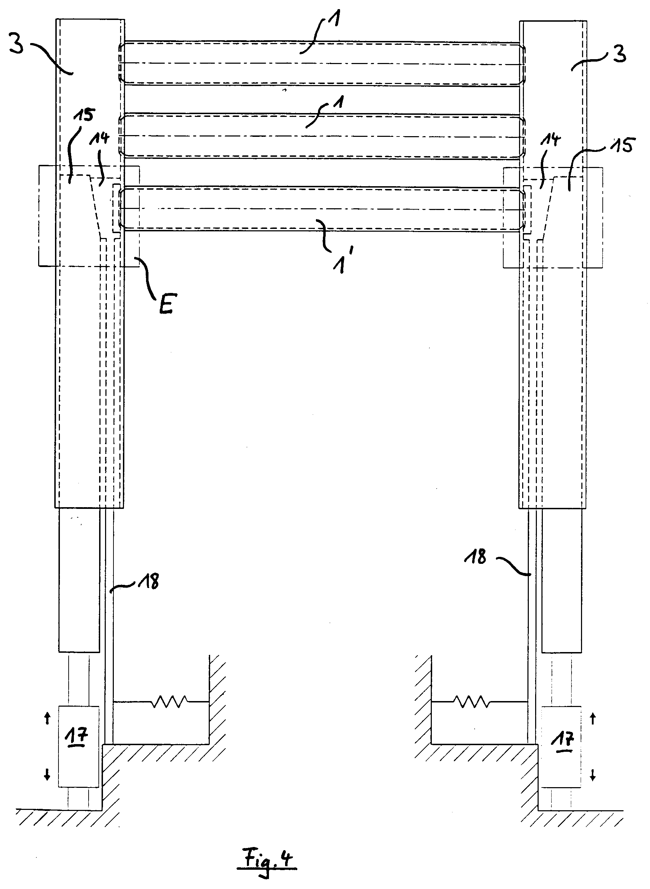

Die Verjüngung, die auch zur Zentrierung der Heizrohre 1 in den Öffnungen 4 dient, kann beispielsweise durch einen kegelstumpfförmigen Bereich 5 oder durch abgerundete Kanten 6 (Figur 3) gebildet sein.

An den dem Heizrohr 1 abgewandten Seiten 7 liegen die Verteiler 3 plan an einem festen Abstützelement 8 an, so daß das Heizrohr 1 gegen die beiden Verteiler 3 verspannt ist.

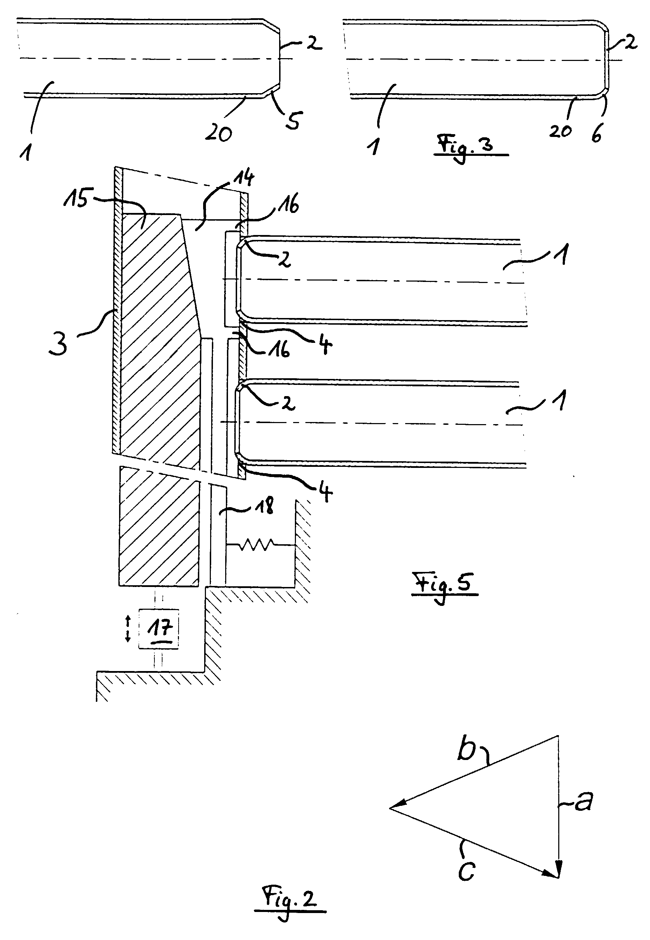

Der eigentliche Schweißvorgang wird durch eine elektrische Widerstandsschweißanlage 9 durchgeführt, die neben einer Schweißstromquelle 10 im wesentlichen am Heizrohr 1 anliegende Elektroden 11 und an den Verteilern 3 anliegende Elektroden 12 aufweist. Nachdem Anlegen des Schweißstroms, vorzugsweise von niedriger Spannung und großer Stromstärke, der an der Stoßstelle einen großen ohmschen Widerstand findet und daher eine so hohe Temperatur erzeugt, daß der Werkstoff der Rohrenden 2 und der Verteiler 3 an der Stoßstelle in einen teigigen Zustand gerät, müssen die zu verbindenden Werkstücke fest zusammengepreßt werden. Hierzu wird erfindungsgemäß von der Außenseite des Bogens eine Kraft a auf das Heizrohr 1 über einen Druckzylinder 13 aufgebracht. Bezüglich der Bogenlänge des Heizrohres 1 wird die Kraft a genau in der Mitte des gebogenen Bereiches des Heizrohres 1 aufgebracht, so daß sie sich in zwei gleich große Kraftkomponenten b und c aufteilt (Figur 2). Diese Kraftkomponenten b und c bewirken die zum Verschweißen erforderliche Anpreßkraft der Enden 2 des Heizrohres 1 gegen die Verteiler 3. Über den Druckzylinder 13 kann der Verlauf der aufgebrachten Kraft a beliebig gesteuert oder geregelt werden.

In Figur 4 ist eine Vorrichtung zur Durchführung des zuvor beschriebenen Verfahrens schematisch dargestellt. Dabei werden die Heizrohre 1 einzeln nacheinander von oben nach unten an die beiden Verteiler 3 angeschweißt. Bei der in Figur 4 dargestellten Position wird gerade das Heizrohr 1' als drittes Heizrohr mit den Verteilern 3 verbunden.

Um den Verteiler 3 an dem die Öffnungen 4 umgebenden Bereich gegen die Kraftkomponente b bzw. c zu unterstützen, ist im inneren des Verteilers 3 ein Abstützelement 14 und ein Gegendruckelement 15 angeordnet. Das Abstützelement 14 weist an der den Heizrohren 1 zugewandten Seite einen ringförmigen Bereich 16 auf, der sich um die Öffnung 4 herum von innen gegen die Verteilerwand anlegt. An den einander zugewandten Seiten sind das Abstützelement 14 und das Gegendruckelement 15 keilförmig ausgebildet, so daß durch eine relative Verschiebung gegeneinander in Längs-Richtung des Verteilers die Abmessungen des Abstützelementes 14 und des Gegendruckelementes 15 in Querrichtung des Verteilers veränderbar sind. In dem in den Figuren 4 und 5 dargestellten Ausführungsbeispiel ist das Gegendruckelement 15 über eine Hubvorrichtung 17 derart nach oben und unten hin und her verschiebbar, daß bei einem Hochfahren des Gegendruckelementes 15 das Abstützelement 14 mit seinem ringförmigen Bereich 16 stärker gegen die dem Heizrohr 1 zugewandte Innenseite des Verteilers 3 gepreßt wird. In gleicher Weise kann die Vorrichtung aus Figur 4 auch so ausgebildet sein, daß die Verteiler in einem Winkel zur Vertikalen, insbesondere horizontal angeordnet und verfahrbar sind.

Nachdem ein Heizrohr 1 an die beiden Verteiler 3 angeschweißt worden ist, verfährt zunächst das Gegendruckelement 15 nach unten, woraufhin das Abstützelement 14, das an einem biegsamen Träger 18 befestigt ist, sich von der Innenseite des Verteilers 3 abhebt. Dann werden die beiden Verteiler entsprechend dem Abstand zwischen den Öffnungen 4 soweit nach oben verfahren, daß sich das nächste einzusetzende Heizrohr 1' in der Schweißposition befindet. Danach wird das Gegendruckelement 15 über die Hubvorrichtung 17 wieder nach oben verfahren, wodurch das Abstützelement 14 aufgrund der Keilwirkung sich mit seinem ringförmigen Bereich 16 wieder von innen gegen den die Öffnung 4 umgebenden Bereich der Verteiler 3 anlegt. Das neue Heizrohr 1' ist nun zwischen den beiden Verteilern 3 verspannt und kann nach dem oben beschriebenen erfindungsgemäßen Verfahren mit den Verteilern 3 verschweißt werden.

## Patentansprüche

1. Verfahren zur Herstellung von Heizkörpern, wobei mehrere Heizrohre an ihren Enden jeweils mit einem Verteiler verbunden, insbesondere verschweißt werden,
**dadurch gekennzeichnet,**
- daß die Heizrohre (1) gebogen werden,
- daß die Heizrohre (1) an ihren Enden (2) gegen die Verteiler (3) verspannt werden,
- und daß während des Verbindungsvorgangs von der Außenseite des Bogens her eine Kraft (a) auf die Heizrohre (1) aufgebracht wird.

2. Verfahren nach Anspruch 1, **dadurch gekennzeichnet,** daß die Heizrohre (1) über ihre gesamte Länge gleichmäßig gebogen werden.

3. Verfahren nach Anspruch 1, **dadurch gekennzeichnet,** daß die Heizrohre (1) zwischen ihren geraden Endbereichen (20) nur in einem mittleren Bereich gebogen werden.

4. Verfahren nach einem der vorherigen Ansprüche, **dadurch gekennzeichnet,** daß die Kraft (a) bezüglich der Bogenlänge der Heizrohre (1) in deren Mitte aufgebracht wird.

5. Verfahren nach einem der vorherigen Ansprüche, **dadurch gekennzeichnet,** daß die Kraft (a) steuerbar oder regelbar auf die Heizrohre (1) aufgebracht wird.

6. Verfahren nach einem der vorherigen Ansprüche, **dadurch gekennzeichnet,** daß die Heizrohre (1) über einen Winkel zwischen 3° und 90°, vorzugsweise zwischen 10° und 30° gebogen werden.

7. Verfahren nach einem der vorherigen Ansprüche, **dadurch gekennzeichnet,** daß die Heizrohre (1) an beiden Enden (2) gleichzeitig mit den Verteilern (3) verbunden werden.

8. Verfahren nach einem der vorherigen Ansprüche, **dadurch gekennzeichnet,** daß die Heizrohre (1) vor dem Verbinden mit den Verteilern (3) an den Enden (2) sich verjüngend, insbesondere abgerundet oder konusförmig ausgeformt werden und mit ihren Enden (2) in Öffnungen (4) der Verteiler (3) eingesteckt werden.

9. Verfahren nach einem der vorherigen Ansprüche, **dadurch gekennzeichnet,** daß von der Innenseite der Verteilerkästen (3) her eine Gegenkraft auf die die Öffnungen (4) der Verteiler (3) umgebenden Bereiche

10. Verfahren nach einem der vorherigen Ansprüche, **dadurch gekennzeichnet,** daß die Heizrohre (1) mit den Verteilern (3) durch Widerstandsschweißen oder durch Kondensatorentladungsschweißen verbunden werden.

11. Verfahren nach einem der vorherigen Ansprüche, **dadurch gekennzeichnet,** daß die Heizrohre (1) einzeln nacheinander mit den Verteilern (3) verbunden werden.

12. Verfahren nach einem der vorherigen Ansprüche, **dadurch gekennzeichnet,** daß die Heizrohre (1) nach dem Verbinden mit den Verteilern (3) gerade gebogen werden.

13. Vorrichtung zur Durchführung des Verfahrens nach einem der vorherigen Ansprüche, **dadurch gekennzeichnet,** daß sie Mittel (13) zum Aufbringen einer Kraft auf die Heizrohre (1), insbesondere einen Druckzylinder (13), aufweist.

14. Heizkörper, **dadurch gekennzeichnet,** daß er nach einem Verfahren der Ansprüche 1 bis 12 hergestellt ist.
